# EUROPÄISCHE PATENTSCHRIFT

(11) **EP 1 530 689 B1**
(45) Veröffentlichungstag und Bekanntmachung des Hinweises auf die Patenterteilung: **08.10.2008**
(21) Anmeldenummer: 03750431.3
(22) Anmeldetag: 23.08.2003
(51) Int. Cl.: F16D 69/02

(54) **IN EINEM MEDIUM LAUFENDE REIBSCHICHT**
FRICTION LAYER RUNNING IN A MEDIUM
COUCHE DE FROTTEMENT DANS UN MILIEU

(30) Priorität: 26.08.2002 DE 10239093
(43) Veröffentlichungstag der Anmeldung: 18.05.2005
(73) Patentinhaber: Diehl Metall Stiftung & Co. KG, 90552 Röthenbach (DE); Fraunhofer-Gesellschaft zur Förderung der angewandten Forschung e.V., 80686 München (DE)
(72) Erfinder: GEBHARD, Friedrich, 91207 Lauf/Pegnitz (DE); HOLDERIED, Meinrad, 91338 Igensdorf (DE); SCHNEIDER, Lothar, 01640 Coswig (DE); WALTHER, Gunnar, 01309 Dresden (DE); WEISSGÄRBER, Thomas, 01328 Dresden (DE)
(74) Vertreter: Diehl Patentabteilung
(86) Internationale Anmeldenummer: PCT/EP2003/009365
(87) Internationale Veröffentlichungsnummer: WO 2004/025136

(56) Entgegenhaltungen:
- DD-A- 89 727
- DE-A- 3 705 661
- FR-A- 2 775 744
- US-A- 5 540 750
- US-B1- 6 336 540
- PATENT ABSTRACTS OF JAPAN vol. 2000, no. 08, 6. Oktober 2000 (2000-10-06) -& JP 2000 130484 A (SUMITOMO ELECTRIC IND LTD), 12. Mai 2000 (2000-05-12)

## Beschreibung

Die Erfindung betrifft eine Reibschicht für zwei sich gegenüberliegende sowie aufeinander zu bewegbare und von einander weg bewegbare und dabei umlaufende Reibteile, wobei wenigstens ein Reibteil aus einer auf einem Träger starr angeordneten Reibschicht besteht, mit den Merkmalen der im Oberbegriff des Patentanspruchs 1 beschriebenen Gattung.

Das technische Anwendungsgebiet der Erfindung ist die reibschlüssige Kraftübertragung zwischen zwei sich gegenüber stehenden umlaufenden Reibteilen, zwischen denen sich ein Medium wie beispielsweise ein flüssiges in Form von Öl befindet. Die Anwendung solcher Reibschichten erfolgt beispielsweise auf einem Träger, der als Synchronring ausgebildet ist, oder bei Kupplungslamellen, Bremsen, Lagerschalen und dergleichen. Vor allem bei unterschiedlichen Kraftfahrzeugtypen kommen aus mechanischen Gründen Stahlsintersynchronringe zum Einsatz. Synchronringe aus Stahlsinter sind einmal in Verbindung mit Stahlkonen als Reibwerkstoff ungeeignet und deshalb muss der Stahlsintersynchronring mit einer Reibschicht versehen werden. Als Werkstoffe für Synchronringe werden zur Zeit fast ausschließlich Sondermessing und Sinterstahl verwendet, für größere Bauteile und höhere Festigkeitsanforderungen werden auch Sinterschmiedestahl und geschmiedeter Kompaktstahl in Anwendung gebracht. Sondermessing dient auch als Reibwerkstoff, jedoch ist das Verschleißverhalten von Sondermessing bei hohen Belastungen nicht ausreichend.

Nach dem Stand der Technik werden an Synchronringen neben den Sondermessingsynchronringen am häufigsten Reibwerkstoffschichten aus Molybdänspritzschichten, organische Papierreibbelage und Streusinterreibbeläge auf der Basis von Kupferlegierungen eingesetzt. Der vorherrschende Werkstoff für Reibschichten sind nach dem Stand der Technik Molybdänspritzschichten. Bei höheren Geschwindigkeiten über 10 m/s kommt es jedoch bei Molybdänspritzschichten zu Wärmespuren und Fresserscheinungen auf dem der Reibschicht zugehörigen Reibteilgegenstück.

Vorbekannte organische Papierbeläge sind in der Regel astbestfreie Faserverbundwerkstoffe mit Phenolharzbindung und eingelagerten Hartstoffteilchen und Graphitteilchen. Dieser Belag wird beispielsweise auf den Synchronring aufgeklebt. Papierbeläge sind jedoch ebenfalls für höhere Belastungen nicht geeignet.

Streusinterbeläge werden üblicherweise durch Aufstreuen einer Mischung aus Metallpulvern wie beispielsweise Kupfer, Bronze oder Messing und nichtmetallischen Pulvern, wie beispielsweise Graphit und Quarzite auf ebene Bleche und anschließendes Sintern hergestellt. Die aufgestreute Pulvermischung wird dann auf eine Stahlfolie aufgesintert und dann mit dem Stahlsynchronring mittels Laser- oder Punktschweißen verbunden. Es ist auch bekannt Sintereisenbeläge ohne Stahlblechunterlage direkt auf den Träger aufzupressen und aufzusintern. Die Auflage von gespritzten Molybdänschichten auf den Träger, ferner das Auftragen organischer Papierreibbeläge und von Streusinterreibbelägen erfordert für die Beschichtung zusätzliche Fertigungsschritte. In der Regel sind die zusätzlichen Fertigungsschritte bei Aufbringung der Reibschicht auf den Träger in die Herstellung des Trägers nicht integrierbar. Im allgemeinen werden sie von externen Firmen durchgeführt, was einen entsprechenden Transportaufwand, eine verlängerte Herstellungszeit und zusätzliche Kosten verursacht.

Um eine reibschlüssige Kraftübertragung zum Beispiel bei einem Getriebe eines Kraftfahrzeugs zu erzielen, muss in möglichst kurzer Zeit ein hohes Reibmoment übertragen werden. Da die sich gegenüberliegenden Reibteile der Synchronringe in Öl laufen, ist es deshalb erforderlich, das in den Reibspalten vorhandene Öl schnell und ganz zu entfernen. Dazu ist es bekannt auf den Reibflächen unterschiedliche Nutungen und verschiedene Rillen anzubringen, eine hohe Oberflächenrauhigkeit zu schaffen oder eine offene Porosität mit vielen Poren an der Reiboberfläche vorzusehen. Das Anbringen von Nuten auf der Reibschicht beeinflusst deshalb vorrangig den Reibungszahlaufbau zu Beginn eines Schaltvorganges. Gemäß dem Stand der Technik werden Nuten überwiegend als Strehlungen und Axialnuten ausgeführt. Strehlungen werden durch mechanische Bearbeitung der Reibschicht hergestellt und bedeuten dadurch einen zusätzlichen Herstellungsaufwand. Strehlungen findet man in der Praxis bei Synchronringreibschichten, die nicht porös sind, besonders bei Messingsynchronringen und Molybdänspritzschichten. In der Regel einfacher sind Axialnuten anzubringen, denn Axialnuten können meist schon bei der Formgebung spanlos angebracht werden. Aus diesem Grund ist auch bei Messingsynchronringen die Strehlung meist mit einer Axialnutung kombiniert. Für das Profilieren der Oberfläche mittels Axialnuten gibt es ein optimales Verhältnis zwischen Nutbreite und Stegbreite, ferner ist auch das nachträgliche Einpressen der Nuten möglich. Nachteilig ist allerdings, dass bei Axialnuten die Ölabstreifkante der Nut senkrecht zur Bewegungsrichtung angeordnet ist und das Öl dadurch weniger schnell abgeführt werden kann, was sich wiederum negativ auf die Synchronisierung und die Verkürzung des Schaltvorganges auswirkt.

So ist beispielsweise aus der DE 35 32 672 A1 ein Ring aus einem metallischen Werkstoff mit einer Schicht aus einem Reibwerkstoff auf einer kegeligen Reibfläche mit im wesentlichen axial verlaufenden Nuten, die die Reibfläche in Einzelreibflächen in Form von Stegen unterteilen, insbesondere als Synchronring für Schaltgetriebe vorbekannt. Die Reibfläche arbeitet dabei mit einer kegeligen Nebenreibfläche aus einsatzgehärtetem Stahl zusammen. Der Ring ist aus hochverdichtetem Sintermaterial oder aus Sinterstahl hergestellt und als Reibwerkstoff werden Nickel oder Molybdän in einer Schicht aufgetragen. In den Ansprüchen werden spezielle Verhältnisse der Stegbreite zum Umfang der Reibfläche und das Verhältnis der Nuttiefe zur Stegbreite hier offenbart. Mit diesen Merkmalen nach der DE 35 32 672 soll ein geringer Verbrauch an Reibwerkstoff und mit geringerem Fertigungsaufwand eine hohe Leistungsfähigkeit und Lebensdauer erzielt werden.

Aus der DD 232 743 A1 ist eine Strehlung an Reibpartnern von Synchronkupplungen für Zahnradwechselgetriebe insbesondere von Kraftfahrzeugen vorbekannt, wobei der eine Reibpartner mit einem glatten Reibpartner aus Aluminiumkolbengusslegierung gepaart ist, dabei ist der glatte Reibpartner als Gleichlaufkegel, loser Kegelring oder Kegelsegment ausgeführt. Die gewindeförmig verlaufende Stehlung wird nach dem Einsatzhärten so in die Reibfläche oder Reibflächen des Reibpartners aus Stahl eingebracht, dass eine Strehldammbreite von 0,2 bis 0,6 mm und ein Flankenwinkel von 30 bis 90° entstehen, wobei die Rillen ein- oder mehrgängig sein können und die Breite von 0,5 bis 1,0 mm aufweisen. Die Stehlung wird dabei vorzugsweise in den härteren Reibungspartner eingebracht. Durch die vorstehenden Merkmale wird bei dem Stand der Technik der DD 232 743 die Stehlung mit herkömmlichen Fertigungseinrichtungen und Werkzeugen hergestellt und durch das Einbringen der Rillen in den Reibpartner aus einsatzgehärteten Stahl einstehen Strehldämme, die sehr verschleißfest aber nicht spröde sind.

Der Erfindung liegt deshalb die Aufgabe zugrunde, insbesondere für in einem Medium laufende Reibschichten den Übergang der z.B. Flüssigkeitsreibung zu einer hohen Festkörperreibung mit dem dazugehörigen Reibgegenstück in kürzester Zeitdauer zu ermöglichen und eine Reibschicht mit großer nicht durch einen zusätzlichen Arbeitsgang an der fertiggestellten Reibschicht erzielter Drainagewirkung durch Oberflächenprofilierung für das flüssige Medium auf dem Reibbelag herzustellen und schließlich generell eine Verringerung des Zeit- und des Kostenaufwandes zur Herstellung einer Reibschicht auf einem Träger zu ermöglichen.

Die Vorteile der Erfindung bestehen insbesondere darin, dass durch eine definierte Auswahl der Materialbestandteile der Materialzusammensetzung der Reibschicht dafür gesorgt wird, dass in der Materialzusammensetzung und damit der Reibschicht während einer Wärmebehandlung zu der Fertigstellung der Reibschicht auf dem Träger eine dadurch hervorgerufene ausgeprägte Schwundeigenschaft und Schwund gegenüber dem Material des Trägers der Reibschicht auftritt. Das heißt, dass zumindest teilweise die Materialbestandteile der Materialzusammensetzung der Reibschicht während der Wärmebehandlung zu Fertigstellung der Reibschicht die jeweiligen Volumen der Partikelgröße der Materialbestandteile verringern. Durch den auftretenden Schwundvorgang während der Wärmebehandlung der Reibschicht bildet sich eine Netzstruktur aus unregelmäßig verteilten und direkt untereinander verbundenen kanalartigen Vertiefungen in der gesamten Reibschicht aus. Diese kanalartigen Vertiefungen in Form einer miteinander verbundenen Netzstruktur entsteht durch eine Veränderung der Materialbestandteile der Materialzusammensetzung in zwei Stufen, nämlich zu Beginn der Wärmebehandlung der Reibschicht bei niedrigen Anfangstemperaturen erfolgt zuerst der Schwund der Reibschicht, das heißt die Ausbildung der kanalartigen Vertiefungen und anschließend während des Verlaufs der weiteren Wärmebehandlung bei höheren Temperaturen erfolgt dann die starre Verbindung der Reibschichtbestandteile mit der Oberfläche des Trägers auf dem die Reibschicht aufgebracht ist.

Nach Beendigung der Wärmebehandlung der Reibschicht beispielsweise durch Sintern ist damit in der auf dem Träger, der beispielsweise ein Synchronring sein kann, aufgebrachten Reibschicht eine stark und komplett miteinander verästelte Struktur von untereinander verbundenen kanalartigen Vertiefungen entstanden, die in hervorragender Weise in der Lage ist, das in dem Spalt zwischen der Reibschicht und dem Reibteilgegenstück befindliche flüssige Medium beispielsweise in Form von Öl schneller und weit vollständiger aus den Spalt zwischen den beiden Reibteilen zu entfernen, als dies nach dem Stand der Technik mit Nuten oder Rillen bisher der Fall war. Es sind durch die unregelmäßig verteilten kanalartigen Vertiefungen der Netzstruktur damit zwischen den Reibflächen kanalartige Vertiefungen entstanden, die in ihrer Häufigkeit und dem Drainagevermögen durch keine nach den Stand der Technik bisher bekannte Nutungen, Strehlungen, Oberflächenrauhigkeit oder Porosität des Reibbelages übertroffen werden können.

Die sich während der Wärmebehandlung beispielsweise durch Sintern zur Fertigstellung der Reibschicht bildenden kanalartigen Vertiefungen der Netzstruktur in der Reibschicht erstrecken sich in der Regel bis auf die Oberfläche des Trägers der Reibschicht, wodurch für die kanalartigen Vertiefungen die gesamte Höhe der Reibschicht zur Volumenabführung des flüssigen Mediums zum Beispiel in Form von Öl zur Verfügung steht und damit eine große Drainagewirkung für das sich in dem Spalt zwischen der Reibschicht und dem dazugehörigen Reibteilgegenstück befindliche Öl vorhanden ist.

Zusätzlich dient der Drainageerhöhung bei der Abführung des flüssigen Mediums eine Porosität der Reibschicht in Form von Poren, die in der gesamten Fläche der Reibschicht Hohlräume bilden und zusätzlich zu den kanalartigen Vertiefungen für das Abführen von Öl dienen, wobei die Poren dadurch entstehen, dass die Reibschicht aus Basispulverbestandteilen besteht, die mit einer Binderzusammensetzung vermischt sind, wobei sich der Binder während der Wärmebehandlung durch das Sintern verflüchtigt und sich deshalb Poren in der Reibschicht bilden.

Bei der erfindungsgemäßen Reibschicht auf dem Träger bildet sich also bei der normalen Fertigstellung der Reibschicht durch Wärmebehandlung eine Struktur von kanalartigen Vertiefungen aus, die ohne jeden zusätzlichen Arbeitsgang und ohne zusätzlichen Zeit- und Kostenaufwand zur Herstellung dieser Drainagekanäle in der Reibschicht führen. Zur Ausbildung einer großen Breite und einer möglichst großen Anzahl von kanalartigen Vertiefungen zu Bildung der Netzstruktur aus unregelmäßig verteilten und direkt untereinander verbundenen kanalartigen Vertiefungen wird ein Verbundwerkstoff aus metallischen und/oder mineralischen Basispulverbestandteilen mit in der Regel sehr feinen Pulverbestandteilen von geringer Partikelgröße verwendet. Ebenfalls zur Vergrößerung der kanalartigen Vertiefungen dienen Basispulverbestandteile als Bestandteil der Reibschicht, die während der Wärmebehandlung zu Fertigstellung der Reibschicht ihr jeweiliges Volumen der Partikelgröße verringern, so beispielsweise metallische Pulverbestandteile, die zumindest teilweise als Oxide ausgebildet sind, wie etwa Eisenoxide, Kupferoxide oder dergleichen.

Während der Wärmebehandlung in Form des Sinterns der Reibschicht reduzieren sich in entsprechender Schutzgasatmosphäre die Volumen der metallischen Oxide und führen so zu einer Vergrößerung der kanalartigen Vertiefungen. Darüber hinaus dienen zur Förderung der Schwundeigenschaften bzw. des Schwundes der Materialzusammensetzung zur Bildung der kanalartigen Vertiefungen die Beimischung von ein oder mehreren Verbindungen in Form von Metallsalzen zu der Bindemittelzusammensetzung, wobei die Bindemittelzusammensetzung selbst als organischer Binder ausgebildet ist und damit ebenfalls während der Wärmebehandlung überwiegend flüchtig ist und damit Hohlräume hinterlässt. Die der Bindemittelzusammensetzung zugefügten Verbindungen von Metallsalzen zersetzen sich während des Wärmebehandlungsprozesses zunächst in Oxide, und gegen Ende des Sinterprozesses bei höheren Temperaturen wandelt sich die aus dem Metallsalz entstandenen Oxide in reines. Metall um, womit wiederum ein Reduzierungsprozess des Volumens der ursprünglich zugesetzten Metallsalze bzw. der daraus entstandenen Oxide entstanden ist und damit zur Vergrößerung der kanalartigen Vertiefungen und der Vergrößerung der Anzahl derartiger kanalartiger Vertiefungen beiträgt.

Nachstehend wird die Erfindung anhand einer Zeichnung noch näher erläutert.

Es zeigt:

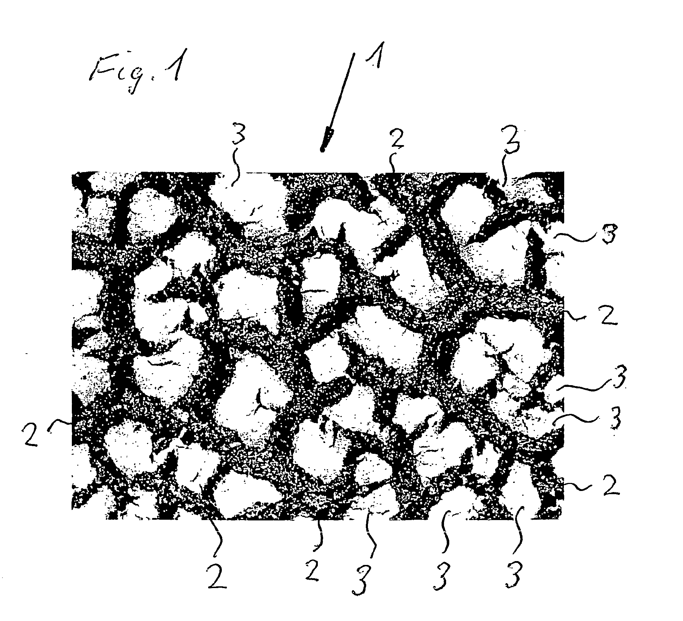

- Fig. 1: in stark vergrößerter Darstellung eine Prinzip- und Teildarstellung der erfindungsgemäßen Reibschicht.

Die erfindungsgemäße Reibschicht wird bei zwei einander gegenüberliegenden Reibteilen verwendet, wobei wenigstens ein Reibteil aus einer auf einem Träger starr angeordneten Reibschicht besteht. Zwischen den beiden Reibteilen und damit also zwischen der Reibschicht und dem dazugehörigen Reibteilgegenstück befindet sich ein flüssiges Medium wie beispielsweise Öl oder jedes andere für diese gegenüberliegenden Reibteile geeignete Medium. Die beiden einander gegenüberliegenden Reibteile sind beispielsweise bei Synchronringen von Kraftfahrzeuggetrieben aufeinander zu bewegbar und voneinander weg bewegbar und dabei umlaufend angeordnet. Die beiden einander gegenüberliegenden Reibteile dienen der reibschlüssigen Kraftübertragung beispielsweise bei Bremsen, Sinterstahllamellen von Kupplungen, bei Synchronringen, Lagerschalen , die Laufflächen von Gleitlagern, Führungen und bei allen anderen Reibelementen, bei denen hohe mechanische Festigkeiten und definierte Reibeigenschaften erforderlich sind. Die beiden sich gegenüberliegenden Reibteile können beispielsweise als Synchronringe für hochbelastete Getriebe von Nutzfahrzeugen und PKW's ausgebildet sein. Die Reibschicht kann auch zur Gestaltung der Lauffläche von Gleitlagern, Führungen und dergleichen dienen, insbesondere dann, wenn in die poröse Schicht nachträglich Schmiermittel wie Öl, PTFE, Graphit und/oder Fett eingebracht werden.

Aus mechanischen Gründen sind bei derartigen hochbelasteten Getrieben Stahlsintersynchronringe erforderlich. Das Material Stahlsinter ist jedoch in Verbindung mit Stahlkonen als Reibwerkstoff ungeeignet und muss deshalb mit einer Reibschicht versehen werden. Die Träger für die Reibschicht können jedoch auch geschmiedet oder schmelzmetallurgisch hergestellt sein oder sie können aus jedem anderen Werkstoff für einen Träger bestehen, wobei der Träger dafür geeignet sein muss, dass eine Reibschicht mittels einer Wärmebehandlung, wie zum Beispiel Sintern auf ihn aufgebracht werden kann. Vorraussetzung für das Material bzw. den Werkstoff des Trägers zum Aufbringen der Reibschicht nach der Erfindung ist jedoch, dass das Material des Trägers während der Erwärmung bei einer Wärmebehandlung beispielsweise dem Sintern keine oder nur geringe d. h. vernachlässigbar kleine Schwundeigenschaften und damit Schwund bezogen auf die Eigenschaften der aufzubringenden und noch zu schildernden Reibschicht aufweist.

Für eine reibschlüssige Kraftübertragung durch zwei sich gegenüberstehende Reibteile, die in einem flüssigen Medium wie Öl laufen, ist es erforderlich in möglichst kurzer Zeit ein hohes Reibmoment übertragen zu können. Für die Höhe des Reibmomentes ist die Paarung der Werkstoffe der beiden Reibteile ausschlaggebend. Für die Zeitdauer zum Aufbau des Reibmomentes ist es erforderlich, den durch das Öl zwischen den beiden Reibteilen verursachten hydrodynamischen Schmiereffekt so schnell wie möglich zu beseitigen, d. h. das Öl möglichst schnell aus dem Spalt zwischen den beiden Reibflächen der Reibteile abzutransportieren. Bei der Reibschicht gemäß der vorliegenden Erfindung erfolgt der Abtransport von Öl zwischen den beiden Reibflächen der Reibteile besonders effektiv über die Netzstruktur aus unregelmäßig verteilten und direkt untereinander verbundenen kanalartigen Vertiefungen. Bei einer weiteren Ausgestaltung der Erfindung wird der Abtransport von Öl darüber hinaus durch eine besondere Materialzusammensetzung der Reibschicht und einer Wärmebehandlung dieser Reibschicht zu ihrer Fertigstellung bewirkt. Die Materialbestandteile der Materialzusammensetzung der Reibschicht bestehen aus einem aus ein oder mehreren verschiedenen Basispulverbestandteilen bestehenden Verbundwerkstoff, ferner sind Materialbestandteile der Materialzusammensetzung weitere Zusätze in Pulverform und schließlich sind weitere Materialbestandteile noch eine Bindemittelzusammensetzung, wobei die Basispulverbestandteile, die weiteren Zusätze und die Bindemittelzusammensetzung miteinander vor dem Auftragen vermischt werden. Die Schichtdicke der Reibschicht liegt dabei zwischen 10 bis 1000 µm.

Der Verbundwerkstoff aus Basispulverbestandteilen besteht dabei aus ein oder mehreren Metallen und/oder Metalllegierungen oder auch aus ein oder mehreren Mineralien. Für die metallischen Basispulverbestandteile oder auch für die mineralischen Basispulverbestandteile gilt in der Regel, dass diese aus sehr feinen Pulverbestandteilen von geringer Partikelgröße bestehen. Die mittlere Teilchen- bzw. Partikelgröße der metallischen Basispulverbestandteile liegt dabei im Bereich von 0,1 µm bis 150 µm. Die Basispulverbestandteile können dabei aus Materialien wie verschleißfestem Pulver, sowie weiteren nichtmetallischen Zusätzen wie Graphit, Quarzmehl und dergleichen in Pulverform bestehen. Die mineralischen oder metallischen Basispulverbestandteile zusammen mit den nichtmetallischen Zusätzen werden mit einer noch nachher zu beschreibenden Bindemittelzusammensetzung vermischt und auf die Funktionsfläche des Trägers aufgetragen. Durch die nun erfolgende Wärmebehandlung der auf den Träger aufgebrachten Reibschicht beispielsweise in Form von Sintern und/oder der Reduktion zu Metall bildet sich durch den nun einsetzenden Schwundvorgang während der Wärmebehandlung in der Reibschicht eine Netzstruktur aus unregelmäßig verteilten und direkt untereinander verbundenen kanalartigen Vertiefungen 2 in der gesamten Reibschicht 1 aus, siehe dazu Figur 1. Die kanalartigen Vertiefungen 2 sind im großen Umfang und komplett miteinander zu einer unregelmäßig und verästelten Struktur verbunden.

Die kanalartigen Vertiefungen 2 der Netzstruktur der Reibschicht erstrecken sich in ihrer Tiefe in der Regel bis auf die Oberfläche des Trägers für die Reibschicht, wobei der Träger der Reibschicht 1 in der Figur 1 nicht dargestellt ist. Es wird außerdem ausdrücklich darauf hingewiesen, dass aus Gründen der Übersichtlichkeit in der Figur 1 nur die für die Erfindung maßgebende Bestandteile der Reibschicht dargestellt sind. So ist auch nur ein Teilausschnitt aus einer Reibschicht auf einem Träger in der Figur 1 dargestellt. Dieser Ausschnitt ist in einer hohen Vergrößerung von 56:1 zur Verdeutlichung der Oberfläche der erfindungsgemäßen Reibschicht 1 wiedergegeben. Zwischen den kanalartigen Vertiefungen 2 befindet sich der Reibfläche 3 aus Verbundwerkstoff, der den Reibbelag bildet. Diese Reibfläche 3 aus Verbundwerkstoff besteht dann aus den schon geschilderten metallischen Pulverbestandteilen zum Beispiel aus Hartstoffen, zum Beispiel aus Festschmierstoffen wie Graphit und Materialien, die die Duktilität des Werkstoffes entsprechend dem jeweiligen Druckbelastungen bei der Anwendung sicherstellen. In der auf dem Träger aufgebrachten Reibschicht 1 bildet sich zu Beginn der Wärmebehandlung, also bei niedrigen Anfangstemperaturen, zuerst der Schwund der Reibschicht aus, d. h. die Ausbildung der kanalartigen Vertiefungen erfolgt zu Beginn der Wärmebehandlung und anschließend erfolgt während des Verlaufs der weiteren Wärmebehandlung, also bei höheren Temperaturen, eine feste und starre Verbindung der Reibschicht bzw. der Reibflächen 3 mit der Oberfläche des Trägers, es erfolgt also eine Veränderung der Materialbestandteile der Materialzusammensetzung in zwei Stufen.

Um das flüssige Medium Öl möglichst schnell aus dem Spalt zwischen der Reibschicht 1 und dem dazugehörigen Reibgegenstück abzuführen, ist eine möglichst große Breite und eine hohe Anzahl von kanalartigen Vertiefungen 2 erforderlich. Dies wird teilweise, wie bereits geschildert, durch die Auswahl der Basispulverbestandteile des Verbundwerkstoffes mit in der Regel sehr feinen Pulverbestandteilen von geringer Partikelgröße erreicht. Daneben aber enthält die erfindungsgemäße Materialzusammensetzung noch Materialbestandteile beispielsweise in der Form von Basispulverbestandteilen des Verbundwerkstoffes und von Zusätzen zu der Binderzusammensetzung, die ebenfalls zur Ausbildung von breiten und zahlreichen kanalartigen Vertiefungen 2 wesentlich beitragen, und nachstehend beschrieben werden sollen. Die aus diversen Werkstoffen bestehenden Materialbestandteile der Materialzusammensetzung der Reibschicht also beispielsweise die metallischen Basispulverbestandteile sind zumindest teilweise so beschaffen, dass sich während der Wärmebehandlung, also dem Sintern, zur Fertigstellung der Reibschicht 1 die jeweiligen Volumen der Partikelgröße der Materialbestandteile verringern. Das bedeutet, dass die metallischen Basispulverbestandteile in einem wesentlichen Mengenanteil zumindest teilweise als Oxide ausgebildet sind. Diese metallischen Oxide, wie beispielsweise Eisenoxide, Kupferoxide und dergleichen werden während der Wärmebehandlung des Sinterns unter Schutzgasatmosphäre reduzierend gesintert und verringern dadurch das Volumen ihrer Partikelgröße und tragen damit zur Ausbildung der kanalartigen Vertiefungen 2 bei.

Die aus diversen Werkstoffen bestehenden Materialbestandteile der Materialzusammensetzung der Reibschicht bestehen auch aus weiteren Zusätzen in Pulverform, darunter sind auch Metallsalze. Diese Metallsalze werden der Bindermittelzusammensetzung beigegeben, wobei die Bindermittelzusammensetzung als organischer Binder ausgebildet ist und aus ein oder mehreren Bindemittelbestandteilen besteht. Während der Wärmebehandlung der Reibschicht wird die molekulare Struktur der organischen Bindersubstanzen zerstört und ein Großteil der Bruchstücke der organischen Moleküle entweichen als Gase, was ebenfalls zur Volumenverringerung der Bestandteile der Reibschicht während der Wärmebehandlung beiträgt.

Die zugesetzten Verbindungen von Metallsalzen, wie Methanate, Acetate, Hydroxide, Carbonate; Oxalate oder Acetylacetonate werden während der Wärmebehandlung der Reibschicht zunächst in Metalloxide umgewandelt. Während des weiteren Verlaufs des Sinterns bei höheren Temperaturen wird dann bei Vorhandensein einer reduzierenden Atmosphäre aus dem Metalloxid mit geringer Partikelgröße ein weiteres Zersetzungsprodukt der ursprünglich zugesetzten Metallsalze, indem aus dem Metalloxid bei hoher Temperatur ein reines Metall des ursprünglichen Metallsalzes in verringerter Partikelgröße entsteht. Das ursprüngliche Metall des zugesetzten Metallsalzes wird dabei durch auf den jeweiligen Anwendungsfall bezogene Auswahl der Materialbestandteile derart ausgewählt, dass sich das zunächst entstandene Metalloxid und das danach bei höherer Temperatur entstandene reine Metall mit dem in dem Anwendungsfall verwendeten metallischen Basispulverbestandteilen als Legierungsbestandteil gut verbinden lässt.

Da das aus dem Metalloxid des ursprünglichen Metallsalzes gewonnene reine Metall eine sehr kleine Partikelgröße aufweist, beginnt die Sinterung für diese reinen Metallpartikel früher als bei den wesentlich größeren metallischen Basispulverbestandteilen. Die aus den ursprünglichen Metallsalzen reduzierten reinen Metallpartikel tragen deshalb entscheidend zur Ausbildung und zum Wachstum von Sinterhälsen zwischen den metallischen Basispulverbestandteilen bei. Zwischen den relativ großen metallischen Basispulverbestandteilen und den aus den Metallsalzen entstandenen reinen Metallpartikeln findet an den Berührungsstellen der Basispulverbestandteile nun eine gegenseitige Durchdringung und Vermischung dieser jeweiligen Bestandteile statt. Damit werden die aus den Metallsalzen entstandenen reinen Metallpartikel zu Legierungsbestandteilen für die Basispulverbestandteile an den jeweiligen Berührungsstellen der Basispulverbestandteile untereinander. Dadurch wir erreicht, dass die Festigkeit der Reibschicht 1 erhöht wird und gleichzeitig wird durch die stufenweise Zersetzung der Metallsalze erst zu Metalloxiden und dann zu reinem Metall erreicht, dass das Volumen der auf den Träger aufgebrachten Reibschicht während der Wärmebehandlung in seiner Partikelgröße schrumpft und so die Entstehung von breiten und zahlreichen kanalartigen Vertiefungen 2 fördert.

Die der Binderzusammensetzung zugegebenen Verbindungen von Metallsalzen sind jeweils in Flüssigkeiten wie beispielsweise Wasser, Alkohol und/oder dergleichen löslich ausgewählt. Wie bereits erwähnt, lassen sich durch auf den jeweiligen Anwendungsfall bezogene Auswahl der Metallsalze deren Zersetzungsprodukte mit dem Basispulverbestandteilen der Reibschicht als Zusätze mit den Legierungsbestandteilen verbinden. Besonders dafür geeignet sind Verbindungen von Metallsalzen, die als Binderbestandteile der Bindermittelzusammensetzung zugesetzt werden, wenn sie aus leicht reduzierbaren Metallen hergestellt sind. Als leicht reduzierbare Metalle sind geeignet Cu, Fe, Ni, Co, Sn, Mo, W oder Ag als reduzierbare Metalle. Dadurch lässt sich erreichen, dass bei Vorhandensein einer reduzierenden Atmosphäre zum Ende der Wärmebehandlung bei hohen Prozesstemperaturen aus den Zersetzungsprodukten, d. h. aus den aus Metallsalzen entstandenen Metalloxiden, zusätzliche Legierungsbestandteile für die Basismetallpulverbestandteile in Form von Festkörpern als reines Metall gebildet werden.

Die Materialzusammensetzung für die Reibschicht enthält ein aus ein oder mehreren verschiedenen Pulverbestandteilen bestehenden Verbundwerkstoff. Da dieser Verbundwerkstoff in weit überwiegendem Maße aus Pulverbestandteilen besteht, enthält das Material der auf dem Träger aufgebrachten Reibschicht in seiner gesamten Tiefe nach Abschluss der Wärmebehandlung beispielsweise in Form von Sintern als Poren ausgebildete Hohlräume, die zusätzlich neben den kanalartigen Vertiefungen in der Reibschicht durch das Sintern der Pulverbestandteile entstanden sind. Das heißt, dass die Reibschicht in ihrer gesamten Tiefe von Poren durchdrungen ist. Die Gesamtporosität der Reibschicht aus der Netzstruktur der kanalartigen Vertiefungen und der zusätzlichen Porosität aus Poren, die die gesamte Tiefe der Reibschicht durchsetzen, liegt zwischen 20% und 80%. Porosität ist eine Werkstoffeigenschaft, die sich für die Reibungsbeanspruchung in Flüssigkeiten außerordentlich günstig auswirkt. Das betrifft nicht nur die ölabführende Funktion, die die Poren gleichzeitig haben, sondern auch ihre Kühlwirkung und ihre positive Beeinflussung der Notlaufeigenschaften.

Wie vorstehend ausgeführt, ist die gesamte auf den Träger aufgebrachte Reibschicht auch durch Porosität gekennzeichnet. Die auf dem Träger aufgebrachte und durch die Wärmebehandlung in Form von Sintern hergestellte Reibschicht ist deshalb nach Ausbildung der kanalartigen Vertiefungen in ihrer Höhe außerdem noch formbar ausgebildet. Gelegentlich auftretende Maßabweichungen und Aufwerfungen der Reibschicht, die durch das Reduzieren und den damit möglichen örtlichen Verzug der Reibschicht beim Sintern hervorgerufen werden können, sind deshalb durch Kalibrieren der Reibschicht ausgleichbar. Die auf dem Träger aufgebrachte und durch die Wärmebehandlung fertiggestellte Reibschicht ist deshalb durch Kalibrierung auf ein Endmaß mittels Druckanwendung auf die Oberfläche der Reibschicht bringbar. Die Reibschicht ist also derart beschaffen, dass sie durch Druckanwendung kalibriert werden kann, ohne in ihren Funktionen bezüglich der Bremseigenschaften, der kanalartigen Vertiefungen und der Porosität auch zum Ableiten des Öls Schaden zu nehmen.

Zur weiteren Beschreibung der erfindungsgemäßen Reibschicht schließen sich nun die Ausführungsbeispiele Nr. 1, 2 und 3 an.

### Ausführungsbeispiel Nr. 1

### 1. Werkstoff

- Pulver:: - Eisenoxidpulver (Fe₃O₄), Masse 8 g,
- Pulver mit einer Zusammensetzung von 30 % Mo, 9 % Cr, 2,5 % Si, Rest Fe; Masse 2 g,
- Binder:: 2,5 %-ige wässrige Lösung aus Polyvinylpyrrolidon, Volumen 16 ml

### 2. Mischung der Komponenten

Die Werkstoffe wurden 10 min mit einem Rührwerk gemischt.

### 3. Beschichtung

Die Mischung wurde mittels Druckluft verdüst und auf den Innenkonus des sich drehenden Stahl-Synchronrings gesprüht. Die Sprühdicke beträgt 550 µm. Nach einer Trockenzeit von ca. 5 min hat die Schicht eine hohe Grünfestigkeit, so dass die Ringe gut handhabbar sind.

### 4. Entbinderung, Sinterung und Kalibrierung

Entbinderung und Sinterung wurden im selben Ofen in einem Schritt unter Wasserstoffatmosphäre durchgeführt. Dazu wird der Ofen mit einer Aufheizrate von 5K/min aufgeheizt. Die Entbinderung beginnt bei ca. 300 °C und ist bei 600° C abgeschlossen. Der Sinterprozess findet im Temperaturbereich von 1000 °C bis 1200 ° C bei einer Haltezeit von 30 min statt.
Die aufgesinterter Schicht wird mittels eines Kalibrierwerkzeuges bei einer Flächenpressung von 50 bis 100 MPa auf eine Schichtdicke von 300 µm kalibriert.

### 5. Eigenschaften

Nach der Wärmebehandlung besteht die Reibschicht zu 75 Vol% aus Eisen und zu 25 Vol% intermetallischer Phase. Die Gesamtporosität einschließlich der netzartigen Rissstruktur der Reibschicht beträgt 48 %.
Die Tests am Synchronringprüfstand zeigten folgende Ergebnisse:

| Ölsorte | Reservewegverlust (mm) | dynamischer Reibkoeffizient | |
|---|---|---|---|
| | | Versuchsanfang | Versuchsende |
| A | 0,07 | 0,105 | 0,085 |
| B | 0,03 | 0,105 | 0,105 |
| C | 0,03 | 0,110 | 0,100 |

| | | |
|---|---|---|
| Prüfbedingungen: | Flächenpressung: | 4,7 N/mm² |
| | Gleitgeschwindigkeit: | 2,7 m/sec |
| | Massenträgheitsmoment: | 0,05 kg m² |
| | spez. Reibenergie: | 0,1 J/mm² |
| | spez. Reibleistung: | 0,6 W/ mm² |
| | Anzahl Schaltungen: | 25.000 |
| Reibgeometrie: | Reibdurchmesser: | 63,2 mm |
| | Kegelwinkel: | 6° 30' |
| Öle: | Typ A: | mineralisch, SAE 80W |
| | Typ B: | vollsynthetisch, SAE 75W |
| | Typ C: | vollsynthetisch, SAE 75W-90 |

### Ausführungsbeispiel Nr. 2

### 1. Werkstoff

- Pulver:: - Eisenoxidpulver (Fe₃O₄), Masse 8,2 g
- Graphitpulver, Masse 1,8 g,
- Binder:: 2,5 %-ige wässrige Lösung aus Polyvinylpyrrolidon, Volumen 16 ml

### 2. Mischung der Komponenten

Die Werkstoffe wurden 10 min mit einem Rührwerk gemischt.

### 3. Beschichtung

Die Mischung wurde mittels Druckluft verdüst und auf den Innenkonus des sich drehenden Stahl-Synchronrings gesprüht. Die Sprühdicke beträgt 700 µm. Nach einer Trockenzeit von ca. 8 min hat die Schicht eine hohe Grünfestigkeit, so dass die Ringe gut handhabbar sind.

### 4. Entbinderung, Sinterung und Kalibrierung

Entbinderung und Sinterung wurden im selben Ofen in einem Schritt unter Wasserstoffatmosphäre durchgeführt. Dazu wird der Ofen mit einer Aufheizrate von 5K/min aufgeheizt. Die Entbinderung beginnt bei ca. 300 °C und ist bei 600° C abgeschlossen. Der Sinterprozess findet im Temperaturbereich von 1000 °C bis 1200 ° C bei einer Haltezeit von 30 min statt.
Die aufgesinterter Schicht wird mittels eines Kalibrierwerkzeuges bei einer Flächenpressung von 50 bis 100 MPa auf eine Schichtdicke von 300 µm kalibriert.

### 5. Eigenschaften

Die gesinterte Reibschicht besteht zu 49 Vol% Eisen und 51 Vol% Graphit.
Die Gesamtporosität einschließlich der netzartigen Rissstruktur der Reibschicht beträgt 50 %. Die Tests am Synchronringprüfstand zeigten folgende Ergebnisse:

| Ölsorte | Reservewegverlust (mm) | dynamischer Reibkoeffizient | |
|---|---|---|---|
| | | Versuchsanfang | Versuchsende |
| A | 0,04 | 0,125 | 0,090 |
| B | 0, 07 | 0,120 | 0,100 |
| C | 0,05 | 0,125 | 0,110 |

| | | |
|---|---|---|
| Prüfbedingungen: | Flächenpressung: | 4,7 N/mm² |
| | Gleitgeschwindigkeit: | 2,7 m/sec |
| | Massenträgheitsmoment: | 0,05 kg m² |
| | spez. Reibenergie: | 0,1 J/mm² |
| | spez. Reibleistung: | 0,6 W/ mm² |
| | Anzahl Schaltungen: | 25.000 |
| Reibgeometrie: | Reibdurchmesser: | 63,2 mm |
| | Kegelwinkel: | 6° 30' |
| Öle: | Typ A: | mineralisch, SAE 80W |
| | Typ B: | vollsynthetisch, SAE 75W |
| | Typ C: | vollsynthetisch, SAE 75W-90 |

### Ausführungsbeispiel Nr. 3

### 1. Werkstoff

- Pulver:: - Kupferoxidpulver (CuO), Masse 8,6 g
- Zinnpulver, Masse 0,58 g
- Graphitpulver, Masse 0,82 g
- Binder:: 2,5 %-ige wässrige Lösung aus Polyvinylpyrrolidon, Volumen 16 ml

### 2. Mischung der Komponenten

Die Werkstoffe wurden 10 min mit einem Rührwerk gemischt.

### 3. Beschichtung

Die Mischung wurde mittels Druckluft verdüst und auf den Innenkonus des sich drehenden Stahl-Synchronrings gesprüht. Die Sprühdicke beträgt 680 µm. Nach einer Trockenzeit von ca. 8 min hat die Schicht eine hohe Grünfestigkeit, so dass die Ringe gut handhabbar sind.

### 4. Entbinderung, Sinterung und Kalibrierung

Entbinderung und Sinterung wurden im selben Ofen in einem Schritt unter Wasserstoffatmosphäre durchgeführt. Dazu wird der Ofen mit einer Aufheizrate von 5K/min aufgeheizt. Die Entbinderung beginnt bei ca. 300 °C und ist bei 600° C abgeschlossen. Der Sinterprozess findet im Temperaturbereich von 600°C bis 850 ° C bei einer Haltezeit von 30 min statt.
Die aufgesinterter Schicht wird mittels eines Kalibrierwerkzeuges bei einer Flächenpressung von 50 bis 100 MPa auf eine Schichtdicke von 300 µm kalibriert.

### 5. Eigenschaften

Die gesinterte Reibschicht besteht zu 70 Vol% Bronze und 30 Vol% Graphit.
Die Gesamtporosität einschließlich der netzartigen Rissstruktur der Reibschicht beträgt 42 %.

### Bezugszeichenliste

- 1: Reibschicht
- 2: kanalartige Vertiefungen
- 3: Reibfläche

## Patentansprüche

1. Reibschicht für zwei sich gegenüberliegende sowie aufeinander zu bewegbare und voneinander weg bewegbare und dabei umlaufende Reibteile, wobei wenigstens ein Reibteil aus einer auf einem Träger starr angeordneten Reibschicht besteht und sich zwischen der Reibschicht und dem dazugehörigen Reibteilgegenstück ein flüssiges Medium befindet,
**dadurch gekennzeichnet,**
**dass** die Reibschicht mit einer Netzstruktur aus unregelmäßig verteilten und direkt untereinander verbundenen kanalartigen Vertiefungen in der gesamten Reibschicht versehen ist, wobei sich die kanalartigen Vertiefungen der Netzstruktur der Reibschicht in ihrer Tiefe überwiegend bis auf die Oberfläche des Trägers erstrecken, und wobei das Material der aufgebrachten Reibschicht zusätzlich zu den kanalartigen Vertiefungen in seiner gesamten Tiefe als Poren ausgebildete Hohlräume enthält, wobei die Materialzusammensetzung der Reibschicht einen Verbundwerkstoff enthält, der aus einem oder mehreren metallischen und/oder mineralischen Basispulverbestandteilen besteht, und dass die Materialzusammensetzung ferner weitere Zusätze in Pulverform enthält.

2. Reibschicht nach Anspruch 1,
**dadurch gekennzeichnet,**
**dass** die Reibschicht aus mit einem Bindemittel vermischten Pulverbestandteilen eines Werkstoffs besteht und die Reibschicht zu ihrer Fertigstellung einer Wärmebehandlung unterzogen wird.

3. Reibschicht nach einem der Ansprüche 1 oder 2,
**dadurch gekennzeichnet,**
**dass** die Gesamtporosität der Reibschicht aus der Netzstruktur der kanalartigen Vertiefungen und der zusätzlichen Porosität aus den Poren, die die gesamte Tiefe der Reibschicht durchsetzen, zwischen 20% und 80% liegt.

4. Reibschicht nach einem der vorhergehenden Ansprüche,
**dadurch gekennzeichnet,**
**dass** die auf dem Träger aufgebrachte und fertig gestellte Reibschicht nach Ausbildung der kanalartigen Vertiefungen in ihrer Höhe verformbar ausgebildet ist.

5. Reibschicht nach einem der vorhergehenden Ansprüche,
**dadurch gekennzeichnet,**
**dass** dem Verbundwerkstoff nichtmetallische Zusätze, wie z. B. Graphit, in Pulverform zugegeben sind.

6. Reibschicht nach einem der vorhergehenden Ansprüche,
**dadurch gekennzeichnet,**
**dass** die metallischen Basispulverbestandteile Metalle und/oder Metalllegierungen sind.

7. Reibschicht nach einem der vorhergehenden Ansprüche,
**dadurch gekennzeichnet,**
**dass** die metallischen und/oder mineralischen Basispulverbestandteile überwiegend sehr feine Pulverbestandteile von geringer Partikelgröße sind.

8. Reibschicht nach einem der vorhergehenden Ansprüche,
**dadurch gekennzeichnet,**
**dass** der Verbundwerkstoff metallische Basispulverbestandteile von einer mittleren Teilchengröße in dem Bereich von 0,1 µm bis 150 µm enthält.

9. Reibschicht nach einem der vorhergehenden Ansprüche,
**dadurch gekennzeichnet,**
**dass** die metallischen Basispulverbestandteile zumindest teilweise als Oxide ausgebildet sind.

10. Reibschicht nach Anspruch 9,
**dadurch gekennzeichnet,**
**dass** die Oxide Eisenoxide, Kupferoxide und dergleichen sind.

11. Reibschicht nach einem der vorhergehenden Ansprüche,
**dadurch gekennzeichnet,**
**dass** die Bindemittelzusammensetzung als organischer Binder ausgebildet ist und aus ein oder mehreren Bindemittelbestandteilen besteht.

12. Reibschicht nach einem der vorhergehenden Ansprüche,
**dadurch gekennzeichnet,**
**dass** der Bindemittelzusammensetzung als Bestandteil ein oder mehrere Verbindungen in Form von Metallsalzen zugegeben ist.

13. Reibschicht nach Anspruch 12,
**dadurch gekennzeichnet,**
**dass** die Verbindungen von Metallsalzen Methanate, Acetate, Hydroxyde, Karbonate, Oxalate oder Acetylacetonate sind.

14. Reibschicht nach einem der Ansprüche 12 oder 13,
**dadurch gekennzeichnet,**
**dass** die Verbindungen von Metallsalzen in Flüssigkeiten wie beispielsweise Wasser, Alkohol und/oder dergleichen löslich sind.

15. Reibschicht nach einem der Ansprüche 12 bis 14,
**dadurch gekennzeichnet,**
**dass** die aus zugesetzten Metallsalzen bestehenden Binderbestandteile der Bindemittelzusammensetzung leicht reduzierbaren Metalle sind.

16. Reibschicht nach Anspruch 15,
**dadurch gekennzeichnet,**
**dass** die leicht reduzierbaren Metalle Cu, Fe, Ni, Co, Sn, Mo, W oder Ag sind.

17. Reibschicht nach einem der vorhergehenden Ansprüche,
**dadurch gekennzeichnet,**
**dass** das zwischen Reibschicht und dem Reibteilgegenstück befindliche flüssige Medium Öl ist.

18. Reibschicht nach einem der vorhergehenden Ansprüche,
**dadurch gekennzeichnet,**
**dass** die Schichtdicke der Reibschicht 10 µm bis 1000 µm beträgt.

19. Verfahren zur Herstellung einer Reibschicht nach einem der Ansprüche 1 bis 18,
**dadurch gekennzeichnet,**
**dass** die Reibschicht zu ihrer Fertigstellung einer Wärmebehandlung unterzogen wird, wobei die Materialbestandteile der Materialzusammensetzung für die Reibschicht derart ausgewählt werden, dass die Materialzusammensetzung und damit die Reibschicht einen, durch die Wärmebehandlung zu ihrer Fertigstellung ausgelösten, ausgeprägten Schwund gegenüber dem Material des Trägers der Reibschicht aufweist, und dass durch den Schwund während der Wärmebehandlung in der Reibschicht eine Netzstruktur aus unregelmäßig verteilten und direkt untereinander verbundenen kanalartigen Vertiefungen in der gesamten Reibschicht ausgebildet wird und zusätzlich zu den kanalartigen Vertiefungen in seiner gesamten Tiefe als Poren ausgebildete Hohlräume ausgebildet werden.

20. Verfahren nach Anspruch 19,
**dadurch gekennzeichnet,**
**dass** in der auf dem Träger befindlichen Reibschicht durch Wärmebehandlung zu ihrer Fertigstellung eine Veränderung der Materialbestandteile der Materialzusammensetzung in zwei Stufen erfolgt, nämlich dass zu Beginn der Wärmebehandlung bei Anfangstemperaturen zuerst der Schwund der Reibschicht, d. h. die kanalartigen Vertiefungen ausgebildet werden und dass anschließend während des Verlaufs der weiteren Wärmebehandlung bei Temperaturen, die über den Anfangstemperaturen liegen, die Reibschicht mit der Oberfläche des Trägers starr verbunden wird.

21. Verfahren nach einem der Ansprüche 19 oder 20,
**dadurch gekennzeichnet,**
**dass** bei Vorhandensein einer reduzierenden Atmosphäre zum Ende der Wärmebehandlung bei hohen Prozesstemperaturen aus den Zersetzungsprodukten, insbesondere aus den aus Metallsalzen entstandenen Metalloxiden, zusätzliche Legierungsbestandteile für die Basispulverbestandteile in Form von Festkörpern als reines Metall gebildet werden.

22. Verfahren nach einem der vorhergehenden Ansprüche,
**dadurch gekennzeichnet,**
**dass** durch die auf den jeweiligen Anwendungsfall bezogene Auswahl der Metallsalze deren Zersetzungsprodukte mit den Basispulverbestandteilen der Reibschicht als zusätzliche Legierungsbestandteile verbunden werden.

23. Verfahren nach einem der vorhergehenden Ansprüche,
**dadurch gekennzeichnet,**
**dass** die Wärmebehandlung der auf den Träger aufgebrachten Materialzusammensetzung der Reibschicht mittels Sintern durchgeführt wird.

24. Verfahren nach einem der vorhergehenden Ansprüche,
**dadurch gekennzeichnet,**
**dass** die auf den Träger aufgebrachte und durch Wärmebehandlung fertig gestellte Reibschicht durch Kalibrierung mittels Druckanwendung auf die Oberfläche der Reibschicht auf ein Endmaß gebracht wird.

25. Verfahren nach einem der vorhergehenden Ansprüche,
**dadurch gekennzeichnet,**
**dass** die aus diversen Werkstoffen bestehenden Materialbestandteile der Materialzusammensetzung der Reibschicht zumindest teilweise derart beschaffen sind, dass während der Wärmebehandlung zur Fertigstellung der Reibschicht die jeweiligen Volumen der Partikelgröße der Materialbestandteile verringert werden.

26. Verwendung der Reibschicht nach einem der Ansprüche 1 bis 18,
**dadurch gekennzeichnet,**
**dass** die Reibschicht zur Ausbildung von Laufflächen von Gleitlagern, Führungen und dergleichen dient und dass Schmiermittel in die Gesamtporosität der Reibschicht eingebracht wird.

## Claims

1. Friction layer for two friction parts which are located opposite one another and can be moved towards one another and away from one another and rotated, where at least one friction part comprises a friction layer which is rigidly fixed to a support and a liquid medium is present between the friction layer and the associated companion part of the friction part,
**characterized in that** the friction layer is provided with a network structure of irregularly distributed and directly interconnected channel-like depressions in the entire friction layer, where the channel-like depressions of the network structure of the friction layer have a depth which predominantly extends to the surface of the support and the material of the applied friction layer contains voids configured as pores in its total depth in addition to the channel-like depressions and the material composition of the friction layer contains a composite which comprises one or more metallic and/or mineral base powder constituents, and **in that** the material composition additionally contains further additives in powder form.

2. Friction layer according to Claim 1, **characterized in that** the friction layer comprises powder constituents of a material mixed with a binder and the friction layer is subjected to heat treatment in its manufacture.

3. Friction layer according to either Claim 1 or 2,
**characterized in that** the total porosity of the friction layer made up of the network structure of the channel-like depressions and the additional porosity of the pores which go through the total depth of the friction layer is from 20% to 80%.

4. Friction layer according to any of the preceding claims, **characterized in that** the friction layer which has been applied to the support and finished can have its height changed after formation of the channel-like depressions.

5. Friction layer according to any of the preceding claims, **characterized in that** nonmetallic additives such as graphite are added in powder form to the composite.

6. Friction layer according to any of the preceding claims, **characterized in that** the metallic base powder constituents are metals and/or metal alloys.

7. Friction layer according to any of the preceding claims, **characterized in that** the metallic and/or mineral base powder constituents are predominantly very fine powder constituents having a small particle size.

8. Friction layer according to any of the preceding claims, **characterized in that** the composite contains metallic base powder constituents having an average particle size in the range from 0.1 µm to 150 µm.

9. Friction layer according to any of the preceding claims, **characterized in that** the metallic base powder constituents are at least partly present as oxides.

10. Friction layer according to Claim 9, **characterized in that** the oxides are iron oxides, copper oxides and the like.

11. Friction layer according to any of the preceding claims, **characterized in that** the binder composition is an organic binder and comprises one or more binder constituents.

12. Friction layer according to any of the preceding claims, **characterized in that** one or more compounds in the form of metal salts are added as constituent to the binder composition.

13. Friction layer according to Claim 12,
**characterized in that** the compounds in the form of metal salts are methanates, acetates, hydroxides, carbonates, oxalates or acetylacetonates.

14. Friction layer according to either Claim 12 or 13,
**characterized in that** the compounds in the form of metal salts are soluble in liquids such as water, alcohol and/or the like.

15. Friction layer according to any of Claims 12 to 14, **characterized in that** the binder constituents of the binder composition which comprise added metal salts are readily reducible metals.

16. Friction layer according to Claim 15,
**characterized in that** the readily reducible metals are Cu, Fe, Ni, Co, Sn, Mo, W or Ag.

17. Friction layer according to any of the preceding claims, **characterized in that** the liquid medium present between friction layer and the companion part of the friction part is oil.

18. Friction layer according to any of the preceding claims, **characterized in that** the thickness of the friction layer is from 10 µm to 1000 µm.

19. Process for producing a friction layer according to any of Claims 1 to 18, **characterized in that** the friction layer is subjected to heat treatment in its manufacture, where the material constituents of the material composition for the friction layer are selected so that the material composition and thus the friction layer have a pronounced shrinkage caused by the heat treatment in its manufacture compared to the material of the support of the friction layer and **in that** a network structure of irregularly distributed and directly interconnected channel-like depressions is formed in the entire friction layer as a result of the shrinkage during the heat treatment of the friction layer and voids configured as pores are formed in its total depth in addition to the channel-like depressions.

20. Process according to Claim 19, **characterized in that** a change in the material constituents of the material composition in the friction layer present on the support occurs in two stages as a result of heat treatment in its manufacture, namely that the shrinkage of the friction layer, i.e. formation of the channel-like depressions, occurs first at the beginning of the heat treatment at initial temperatures and that the friction layer subsequently becomes rigidly bound to the surface of the support during the course of the further heat treatment at temperatures above the initial temperatures.

21. Process according to either Claim 19 or 20, **characterized in that** additional alloy constituents for the base powder constituents in the form of solids are formed as pure metal from the decomposition products, in particular from the metal oxides formed from metal salts, at high process temperatures in the presence of a reducing atmosphere towards the end of the heat treatment.

22. Process according to any of the preceding claims,
**characterized in that** as a result of selection of the metal salts according to the particular application, their decomposition products are bound as additional alloy constituents to the base powder constituents of the friction layer.

23. Process according to any of the preceding claims,
**characterized in that** the heat treatment of the material composition of the friction layer applied to the support is carried out by means of sintering.

24. Process according to,any of the preceding claims,
**characterized in that** the friction layer which has been applied to the support and finished by heat treatment is brought to a final dimension by calibration by means of application of pressure to the surface of the friction layer.

25. Process according to any of the preceding claims,
**characterized in that** the material constituents of the material composition of the friction layer which comprise various materials are at least partly of such a nature that the respective volumes of the particle size of the material constituents are reduced during the heat treatment in the manufacture of the friction layer.

26. Use of the friction layer according to any of Claims 1 to 18, **characterized in that** the friction layer serves to form running surfaces of sliding bearings, bushings and the like and **in that** lubricant is introduced into the total porosity of the friction layer.

## Revendications

1. Couche de frottement pour deux pièces de frottement opposées, pouvant se rapprocher l'une de l'autre et s'écarter l'une de l'autre et en l'occurrence tournantes, dans laquelle au moins une pièce de frottement se compose d'une couche de frottement disposée de façon rigide sur un support et un milieu liquide se trouve entre la couche de frottement et la pièce de frottement opposée correspondante, **caractérisée en ce que** la couche de frottement est pourvue d'une structure réticulée formée par des creux en forme de canaux reliés directement les uns aux autres et répartis irrégulièrement dans toute la couche de frottement, dans laquelle les creux en forme de canaux de la structure réticulée de la couche de frottement s'étendent en profondeur principalement jusqu'à la surface du support, et dans laquelle la matière de la couche de frottement déposée comporte, en plus des creux en forme de canaux, des cavités constituées par des pores sur toute sa profondeur, dans laquelle la composition de la matière de la couche de frottement contient un matériau composite, qui se compose d'un ou de plusieurs composants pulvérulents de base métalliques et/ou minéraux, et **en ce que** la composition de la matière contient en outre d'autres additifs sous forme pulvérulente.

2. Couche de frottement selon la revendication 1,
**caractérisée en ce que** la couche de frottement se compose de composants pulvérulents d'un matériau, mélangés avec un liant, et la couche de frottement est soumise à un traitement thermique pour sa fabrication finale.

3. Couche de frottement selon l'une quelconque des revendications 1 ou 2, **caractérisée en ce que** la porosité totale de la couche de frottement, formée par la structure réticulée des creux en forme de canaux et la porosité supplémentaire formée par les pores, qui traversent toute la profondeur de la couche de frottement, se situe entre 20 % et 80 %.

4. Couche de frottement selon l'une quelconque des revendications précédentes, **caractérisée en ce que** la couche de frottement déposée sur le support et terminée est rendue déformable en hauteur après la formation des creux en forme de canaux.

5. Couche de frottement selon l'une quelconque des revendications précédentes, **caractérisée en ce que** des additifs non métalliques, comme par exemple du graphite, sont ajoutés sous forme pulvérulente au matériau composite.

6. Couche de frottement selon l'une quelconque des revendications précédentes, **caractérisée en ce que** les composants pulvérulents de base métalliques sont des métaux et/ou des alliages métalliques.

7. Couche de frottement selon l'une quelconque des revendications précédentes, **caractérisée en ce que** les composants pulvérulents de base métalliques et/ou minéraux sont principalement des composants pulvérulents très fins avec une petite taille de particules.

8. Couche de frottement selon l'une quelconque des revendications précédentes, **caractérisée en ce que** le matériau composite contient des composants pulvérulents de base métalliques ayant une taille moyenne de particules de l'ordre de 0,1 µm à 150 µm.

9. Couche de frottement selon l'une quelconque des revendications précédentes, **caractérisée en ce que** les composants pulvérulents de base métalliques se présentent au moins en partie sous forme d'oxydes.

10. Couche de frottement selon la revendication 9,
**caractérisée en ce que** les oxydes sont des oxydes de fer, des oxydes de cuivre et analogues.

11. Couche de frottement selon l'une quelconque des revendications précédentes, **caractérisée en ce que** la composition de liant se présente sous la forme d'un liant organique et se compose d'un ou de plusieurs composants de liant.

12. Couche de frottement selon l'une quelconque des revendications précédentes, **caractérisée en ce qu'**un ou plusieurs composés sous la forme de sels métalliques sont ajoutés comme composants à la composition de liant.

13. Couche de frottement selon la revendication 12,
**caractérisée en ce que** les composés de sels métalliques sont des méthanates, des acétates, des hydroxydes, des carbonates, des oxalates ou des acétylacétonates.

14. Couche de frottement selon l'une quelconque des revendications 12 ou 13, **caractérisée en ce que** les composés de sels métalliques sont solubles dans des liquides comme par l'exemple l'eau, l'alcool et/ou analogues.

15. Couche de frottement selon l'une quelconque des revendications 12 à 14, **caractérisée en ce que** les composants de liant de la composition de liant, composés des sels métalliques ajoutés, sont des métaux facilement réductibles.

16. Couche de frottement selon la revendication 15,
**caractérisée en ce que** les métaux facilement réductibles sont Cu, Fe, Ni, Co, Sn, Mo, W ou Ag.

17. Couche de frottement selon l'une quelconque des revendications précédentes, **caractérisée en ce que** le milieu liquide se trouvant entre la couche de frottement et la pièce de frottement opposée est l'huile.

18. Couche de frottement selon l'une quelconque des revendications précédentes, **caractérisée en ce que** l'épaisseur de couche de la couche de frottement vaut de 10 µm à 1 000 µm.

19. Procédé de fabrication d'une couche de frottement selon l'une quelconque des revendications 1 à 18, **caractérisé en ce que** la couche de frottement est soumise à un traitement thermique pour sa fabrication finale, dans lequel les composants de la matière de la composition de matière pour la couche de frottement sont sélectionnés de telle manière que la composition de matière et dès lors la couche de frottement présente, par rapport à la matière du support de la couche de frottement, un retrait marqué, provoqué par le traitement thermique pour sa fabrication finale, et **en ce qu'**il se forme dans toute la couche de frottement, par ce retrait pendant le traitement thermique dans la couche de frottement, une structure réticulée composée de creux en forme de canaux reliés directement les uns aux autres et répartis irrégulièrement et que, en plus des creux en forme de canaux, il se forme des cavités sous forme de pores dans toute sa profondeur.

20. Procédé selon la revendication 19, **caractérisé en ce qu'**il se produit dans la couche de frottement se trouvant sur le support, pendant le traitement thermique pour sa fabrication finale, un changement des composants de matière de la composition de matière en deux étapes, à savoir qu'au début du traitement thermique, aux températures initiales, il se produit d'abord le retrait de la couche de frottement c'est-à-dire la formation des creux en forme de canaux, et qu'ensuite, pendant le déroulement de la suite du traitement thermique à des températures supérieures aux températures initiales, la couche de frottement est rigidement assemblée à la surface du support.

21. Procédé selon l'une quelconque des revendications 19 ou 20, **caractérisé en ce qu'**en présence d'une atmosphère réductrice à la fin du traitement thermique, il se forme aux hautes températures de traitement, à partir des produits de décomposition, en particulier à partir des oxydes métalliques formés à partir des sels métalliques, des composés d'alliage supplémentaires pour les composants pulvérulents de base sous la forme de corps solides en métal pur.

22. Procédé selon l'une quelconque des revendications précédentes, **caractérisé en ce que,** par la sélection des sels métalliques rapportée à chaque cas d'application, leurs produits de décomposition sont liés aux composants pulvérulents de base de la couche de frottement sous la forme de composés d'alliage supplémentaires.

23. Procédé selon l'une quelconque des revendications précédentes, **caractérisé en ce que** le traitement thermique de la composition de matière de la couche de frottement déposée sur le support est effectué par frittage.

24. Procédé selon l'une quelconque des revendications précédentes, **caractérisé en ce que** la couche de frottement déposée sur le support et terminée par un traitement thermique est amenée à sa dimension finale par calibrage au moyen d'une application de pression à la surface de la couche de frottement.

25. Procédé selon l'une quelconque des revendications précédentes, **caractérisé en ce que** les composants de matière de la composition de matière de la couche de frottement, composés de divers matériaux, sont au moins en partie fournis de telle manière que, pendant le traitement thermique pour la fabrication finale de la couche de frottement, les volumes respectifs de la taille de particules des composants de matière soient réduits.

26. Utilisation de la couche de frottement selon l'une quelconque des revendications 1 à 18, **caractérisée en ce que** la couche de frottement sert à former des surfaces de glissement pour des paliers lisses, des guides et analogues, et **en ce qu'**un lubrifiant est introduit dans la porosité totale de la couche de frottement.
